# FASCICULE DE BREVET EUROPEEN

(11) **EP 2 932 714 B1**
(45) Date de publication et mention de la délivrance du brevet: **03.04.2024**
(21) Numéro de dépôt: 13815087.5
(22) Date de dépôt: 13.12.2013
(51) Int. Cl.: H04N 19/124, H04N 19/174, H04N 19/593, H04N 19/13, H04N 19/196

(54) **PROCÉDÉ DE CODAGE ET DÉCODAGE D'IMAGES, DISPOSITIF DE CODAGE ET DÉCODAGE ET PROGRAMMES D'ORDINATEUR CORRESPONDANTS**
VERFAHREN ZUR CODIERUNG UND DECODIERUNG VON BILDERN, CODIERUNGS- UND DECODIERUNGSVORRICHTUNG UND ENTSPRECHENDE COMPUTERPROGRAMME
METHOD OF CODING AND DECODING IMAGES, DEVICE FOR CODING AND DECODING AND COMPUTER PROGRAMS CORRESPONDING THERETO

(30) Priorité: 17.12.2012 FR 1262119
(43) Date de publication de la demande: 21.10.2015
(73) Titulaire: Orange, 92130 Issy-les-Moulineaux (FR)
(72) Inventeur: HENRY, Félix, F-35760 Saint Gregoire (FR); CLARE, Gordon, F-35740 Pace (FR)
(86) Numéro de dépôt international: PCT/FR2013/053062
(87) Numéro de publication internationale: WO 2014/096637

(56) Documents cités:
- US-A1- 2012 114 034
- GORDON C ET AL: "Wavefront Parallel Processing for HEVC Encoding and Decoding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F274, 16 juillet 2011 (2011-07-16), XP030009297,
- SATO (SONY) K ET AL: "Description of Core Experiment 4 (CE4): Quantization", 96. MPEG MEETING; 21-3-2011 - 25-3-2011; GENEVA; (MOTION PICTURE EXPERT GROUP OR ISO/IEC JTC1/SC29/WG11),, no. m20249, 15 avril 2011 (2011-04-15), XP030048816,
- CLARE G ET AL: "An HEVC transcoder converting non-parallel bitstreams to/from WPP", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0032, 22 juin 2012 (2012-06-22) , XP030112394, cité dans la demande
- MUHAMMED COBAN ET AL: "CU-Level QP Prediction", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E391, 11 mars 2011 (2011-03-11), XP030008897, ISSN: 0000-0005
- COBAN (QUALCOMM) M ET AL: "CE4 Subtest 1: Spatial QP prediction (test 1.3.e): combination of test 1.3.b and test 1.3.d", 7. JCT-VC MEETING; 20111121 - 20111130; GENEVA; (JOINT COLLABORATIVE TEAM ON VIDEO CODING OF ISO/IEC JTC1/SC29/WG11 AND ITU-T SG.16 ), , no. JCTVC-G728 15 November 2011 (2011-11-15), XP030229722, Retrieved from the Internet: URL:http://phenix.int-evry.fr/jct/doc_end_ user/documents/7_Geneva/wg11/JCTVC-G728-v3 .zip JCTVC-G728_r2.doc [retrieved on 2011-11-15]
- MUHAMMED COBAN ET AL: "CU-Level QP Prediction", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E391, 11 March 2011 (2011-03-11) , XP030008897,
- SHIMADA S ET AL: "On derivation of luma QP predictor for Wavefront Parallel Processing", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0226, 21 January 2012 (2012-01-21), XP030111253,

## Description

### Domaine de l'invention

La présente invention se rapporte de manière générale au domaine du traitement d'images, et plus précisément au codage et au décodage d'images numériques et de séquences d'images numériques.

L'invention peut ainsi notamment s'appliquer au codage vidéo mis en oeuvre dans les codeurs vidéo actuels (MPEG, H.264, etc) ou à venir ITU-T/VCEG (HEVC) ou ISO/MPEG (HVC).

### Arrière-plan de l'invention

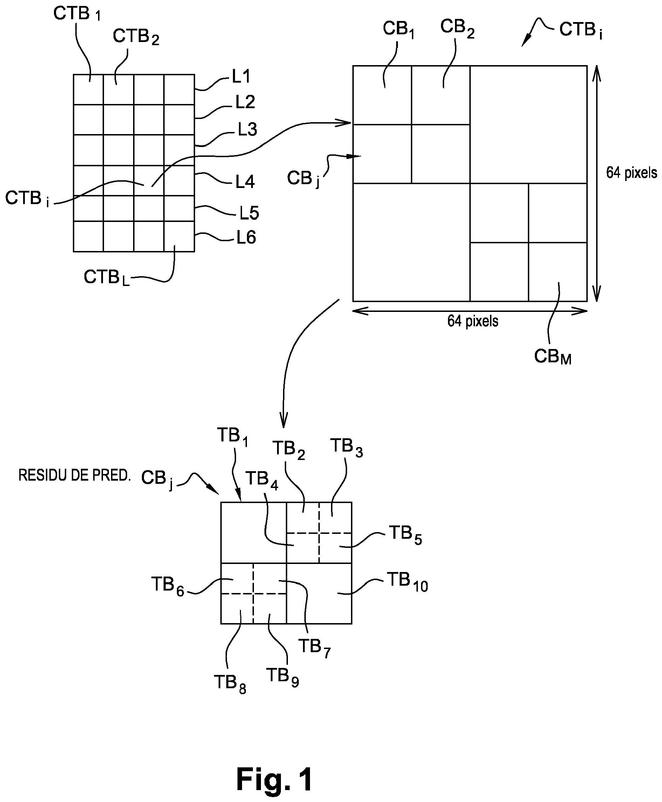

La norme HEVC actuellement en cours d'élaboration et décrite dans le document « B. Bross, W.-J. Han, J.-R. Ohm, G. J. Sullivan, and T. Wiegand, "High efficiency video coding (HEVC) text spécification draft 9," document JCTVC-K1003 of JCT-VC, Shangaï, CN, 10-19 October 2012 » est similaire à la norme précédente H.264, en ce sens qu'elle utilise un partitionnement par blocs de la séquence vidéo. La norme HEVC se distingue toutefois de la norme H.264 par le fait que le partitionnement mis en oeuvre respecte une structure arborescente appelée « quadtree ». A cet effet, comme représenté sur la **figure 1****,** une image courante I_{N} est partitionnée une première fois en une pluralité de blocs carrés CTB₁, CTB₂, ..., CTBᵢ,.... CTB_{L}, par exemple de taille 64x64 pixels (1≤i≤L). Pour un bloc CTBi donné, il est considéré que ce bloc constitue la racine d'un arbre de codage dans lequel :
- un premier niveau de feuilles sous la racine correspond à un premier niveau de profondeur de partitionnement du bloc CTBi pour lequel le bloc CTBi a été partitionné une première fois en une pluralité de blocs de codage,
- un deuxième niveau de feuilles sous le premier niveau de feuilles correspond à un deuxième niveau de profondeur de partitionnement de bloc CTBi pour lequel certains blocs de ladite pluralité de blocs de codage du bloc CTBi partitionné une première fois sont partitionnés en une pluralité de blocs de codage,...
- ... un kième niveau de feuilles sous le k-1 ième niveau de feuilles qui correspond à un kième niveau de profondeur de partitionnement de bloc CTBᵢ pour lequel certains blocs de ladite pluralité de blocs de codage du bloc CTBᵢ partitionné k-1 fois sont partitionnés une dernière fois en une pluralité de blocs de codage.

Dans un codeur compatible HEVC, l'itération du partitionnement du bloc CTBi est effectuée jusqu'à un niveau de profondeur de partitionnement prédéterminé.

A l'issue des partitionnements successifs précités du bloc CTBᵢ, comme représenté à la **figure 1****,** ce dernier est partitionné au final en une pluralité de blocs de codage notés CB₁, CB₂,..., CBⱼ,..., CB_{M} avec 1≤j≤M.

En référence à la **figure 1****,** pour un bloc CBⱼ donné, il est considéré que ce bloc constitue la racine d'un arbre de prédiction et de transformation dudit bloc, par exemple de type transformée en cosinus discrète (DCT). L'arbre de prédiction d'un bloc CBⱼ donné est représentatif de la manière dont est partitionné le bloc CBⱼ en une pluralité de blocs, lesquels sont appelés blocs de prédiction. Pour un bloc de prédiction considéré et comme dans la norme H.264, la norme HEVC précitée met en oeuvre une prédiction de pixels dudit bloc par rapport à des pixels d'au moins un autre bloc qui appartient soit à la même image (prédiction intra), soit à une ou plusieurs images précédentes de la séquence (prédiction inter) qui ont déjà été décodées. De telles images précédentes sont appelées classiquement images de référence et sont conservées en mémoire aussi bien au codeur qu'au décodeur. La prédiction Inter est appelée couramment prédiction à compensation de mouvement.

A l'issue de la prédiction d'un bloc considéré est délivré un bloc prédit.

Conformément à la norme HEVC, lors de l'opération de transformation d'un bloc de codage CBⱼ considéré, ce dernier peut être à nouveau partitionné en une pluralité de blocs plus petits TB₁, TB₂,..., TBᵥ,..., TB_{Q} (1≤v≤Q) qui sont appelés blocs de transformée ou sous-blocs. Un tel partitionnement respecte une arborescence de type « quadtree », appelée « residual quadtree », dans laquelle les feuilles de cette dernière représentent respectivement les blocs de transformée TB₁, TB₂,..., TBᵥ,..., TB_{Q} obtenus sur différents niveaux de profondeur de partitionnement.

Chaque sous-bloc TB₁, TB₂,..., TBᵥ,..., TB_{Q} contient les pixels de résidu représentatif de la différence entre les pixels du bloc de prédiction considéré et les pixels du bloc de codage courant CBⱼ.

Dans l'exemple représenté sur la **figure 1****,** le résidu de prédiction du bloc de codage CBⱼ est par exemple partitionné en dix sous-blocs carrés de taille variable TB₁, TB₂, TB₃, TB₄, TB₅, TB₆, TB₇, TB₈, TB₉, TB₁₀. Un tel partitionnement est représenté en pointillé sur la **figure 1****.**

Les pixels du résidu de prédiction correspondant à chaque bloc de transformée TB₁, TB₂,..., TBᵥ,..., TB_{Q} peuvent être signalés au décodeur comme étant tous à zéro par un indicateur spécifique appelé CBF (Abréviation anglaise de « Coded Block Flag »).

Dans le cas où cet indicateur vaut 0, le résidu est interprété comme étant nul dans le bloc de prédiction considéré. Dans l'exemple représenté sur la **figure 1****,** les blocs de prédiction pour lesquels cet indicateur vaut 0 sont les sous-blocs TB₁ et TB₁₀.

Dans le cas où cet indicateur vaut 1, les blocs résiduels obtenus sont alors transformés, par exemple en utilisant une transformée de type DCT (transformée en cosinus discrète). Dans l'exemple représenté sur la **figure 1****,** les blocs de prédiction pour lesquels cet indicateur vaut 1 sont les blocs TB₂ à TB₉.

Les coefficients de chacun des blocs résiduels transformés sont ensuite quantifiés, par exemple en utilisant une quantification scalaire uniforme, puis codés par un codage entropique. De telles étapes sont bien connues en tant que telles.

Plus particulièrement, l'étape de quantification utilise un pas de quantification qui est déterminé à partir d'un paramètre appelé QP (abréviation anglaise de « Quantization Parameter »). Dans la norme HEVC, il est possible d'avoir un paramètre QP qui est le même pour tous les blocs de transformée d'une image. Afin de mieux s'adapter aux caractéristiques locales de l'image, il est également possible de modifier le paramètre QP pour chaque bloc de codage considéré. Cette modification est effectuée de la façon suivante. Pour un bloc courant, on considère le premier bloc de transformée qui contient effectivement un résidu (CBF=1). En référence à la **figure 1****,** un tel bloc de transformée est le bloc TB₂. Une information de modification du paramètre QP est alors transmise au décodeur. Dans la norme HEVC, cette information consiste en un élément de syntaxe noté QPdelta qui est représentatif de la différence entre le paramètre QP du bloc précédemment codé puis décodé, appelé « QP prédit », et le paramètre QP du bloc courant.

Il convient de noter que le paramètre QP d'un bloc de transformée courant est également utilisé pour déterminer la force de filtrage d'un filtre anti-blocs ou d'atténuation d'effet de blocs (« deblocking filter » en anglais). De façon connue en soi, un tel filtrage est appliqué au bord des blocs de transformée de façon à diminuer les effets de blocs qui apparaissent dans une image, à la frontière des blocs de transformée et des blocs de codage.

En particulier dans la norme HEVC, différents types de filtrages peuvent être considérés, et le paramètre QP est utilisé pour déterminer quel type de filtrage sera sélectionné. L'avantage d'une telle disposition est par exemple d'appliquer un filtrage plus puissant lorsque le paramètre QP est élevé (ce qui correspond à une forte compression du bloc). Il est à noter que même un bloc dont tous les coefficients sont nuls (CBF=0), par exemple le bloc CB₁ sur la **figure 1****,** possède quand même une valeur de paramètre QP qui est prédite à partir de la valeur de paramètre QP du bloc précédemment codé puis décodé, un tel paramètre pouvant être utilisé en cas de filtrage anti-blocs.

Plus particulièrement, le codage entropique peut être mis en oeuvre dans un codeur arithmétique appelé « CABAC » ("Context Adaptive Binary Arithmetic Coder" en anglais), introduit dans le standard de compression AVC (aussi connu sous le nom de ISO-MPEG4 partie 10 et ITU-T H.264).

Ce codeur entropique met en oeuvre différents concepts :
- le codage arithmétique : le codeur, tel que décrit initialement dans le document J. Rissanen and G. G. Langdon Jr, "Universal modeling and coding," IEEE Trans. Inform. Theory, vol. IT-27, pp. 12-23, Jan. 1981, utilise, pour coder un symbole, une probabilité d'apparition de ce symbole ;
- l'adaptation au contexte : il s'agit ici d'adapter la probabilité d'apparition des symboles à coder. D'une part, un apprentissage à la volée est réalisé. D'autre part, suivant l'état des informations préalablement codées, un contexte spécifique est utilisé pour le codage. A chaque contexte correspond une probabilité d'apparition propre du symbole. Par exemple un contexte correspond à un type de symbole codé (la représentation d'un coefficient d'un résidu, signalisation de mode de codage, ...) suivant une configuration donnée, ou un état du voisinage (par exemple le nombre de modes « intra » sélectionnés dans le voisinage, ...) ;
- la binarisation : une mise sous la forme d'une suite de bits des symboles à coder est réalisée. Par la suite, ces différents bits sont envoyés successivement au codeur entropique binaire.

Ainsi, ce codeur entropique met en oeuvre, pour chaque contexte utilisé, un système d'apprentissage des probabilités à la volée par rapport aux symboles précédemment codés pour le contexte considéré.

Par ailleurs, on distingue dans la norme HEVC plusieurs techniques de codage.

Selon une première technique de codage, les blocs d'une image courante sont codés puis décodés séquentiellement selon un ordre lexicographique, par exemple selon un parcours ligne par ligne des blocs, de type « raster-scan », en partant du bloc situé en haut à gauche de l'image jusqu'au bloc situé en bas à droite de l'image. Dans l'exemple représenté sur la **figure 1****,** les blocs CTB₁ à CTB_{L} sont codés puis décodés successivement.

Dans le cas où le bloc courant est le premier bloc à coder d'un ensemble considéré de blocs consécutifs à coder, par exemple une ligne de blocs, il est procédé :
- à la détermination, lors du codage entropique de ce premier bloc courant, de probabilités d'apparition de symbole pour ledit premier bloc courant, lesdites probabilités étant celles qui ont été déterminées pour le dernier bloc codé puis décodé de la ligne de blocs précédente,
- à la détermination de l'élément de syntaxe noté QPdelta qui est représentatif de la différence entre une valeur prédite de paramètre QP, qui est celle du dernier bloc codé puis décodé de la ligne de blocs précédente, et une valeur prédéterminée de paramètre QP que le codeur souhaite associer au premier bloc courant.

Une telle technique procure des performances de compression de l'image qui sont élevées. Toutefois, le codage et le décodage entropiques d'un symbole étant dépendants de l'état de la probabilité apprise jusque-là, le décodage des symboles ne peut se faire que dans le même ordre que celui utilisé lors du codage. Typiquement, le décodage ne peut alors être que séquentiel, empêchant ainsi un décodage en parallèle de plusieurs symboles (par exemple pour profiter des architectures multi-coeur).

Selon une deuxième technique de codage appelée WPP (abréviation anglaise de « Wavefront Parallel Processing »), les blocs d'une image courante sont regroupés en un nombre prédéterminé d'ensembles de blocs voisins deux à deux. Dans l'exemple représenté sur la **figure 1****,** lesdits ensembles de blocs sont constitués par exemple par chacune des lignes L1 à L6 de l'image I_{N}*.* Les ensembles de blocs ainsi constitués sont codés ou décodés en parallèle. Bien entendu, un tel codage nécessite que les blocs situés respectivement au-dessus et au-dessus à droite du bloc courant soient disponibles, de façon à pourvoir en extraire les données nécessaires à la prédiction dudit bloc courant (valeurs de pixels décodés permettant de prédire les pixels du bloc courant dans le mode intra, valeur des vecteurs de mouvement dans le mode inter).

Selon cette deuxième technique de codage, dans le cas où le bloc courant est le premier bloc à coder d'un ensemble considéré de blocs consécutifs à coder, par exemple une ligne de blocs, il est procédé:
- à la détermination, lors du codage entropique de ce premier bloc courant, de probabilités d'apparition de symbole pour ledit premier bloc courant, lesdites probabilités étant celles qui ont été déterminées à l'issue du codage et du décodage du deuxième bloc de la ligne de blocs précédente,
- à la détermination de l'élément de syntaxe noté QPdelta qui est représentatif de la différence entre une valeur prédite de paramètre QP, qui est une valeur prédéterminée appelée QPslice, et une valeur prédéterminée de paramètre QP que le codeur est destiné à associer au premier bloc courant.

De cette façon, il est possible de démarrer le codage d'une ligne de blocs courante sans attendre que le dernier bloc de la ligne précédente soit codé puis décodé. Une telle disposition a pour avantage d'accélérer le temps de traitement du codeur/décodeur et de bénéficier d'une architecture multiplateforme pour le codage/décodage d'une image. Toutefois, les performances de compression obtenues selon cette deuxième technique ne sont pas optimales compte tenu du fait que l'apprentissage des probabilités du codeur entropique CABAC est rendu plus lent à cause de l'initialisation des probabilités en début de ligne.

En outre, dans les documents mentionnés à l'adresse http://phenix.int-evry.fr/jct/doc_end-user/documents/10-Stockholm/wg11/JCTVC-J0032-v3.zip, il est proposé soit de convertir une image dans laquelle les blocs ont été codés en mode WPP en une image dans laquelle les blocs ont été codés en mode séquentiel, soit à l'inverse de convertir une image dans laquelle les blocs ont été codés en mode séquentiel en une image dans laquelle les blocs ont été codés en mode WPP.

La conversion du mode WPP vers le mode séquentiel peut permettre d'améliorer les performances de compression au détriment de la perte de la capacité à coder/décoder les lignes en parallèle. La conversion du mode séquentiel vers le mode WPP peut permettre de rendre «parallélisable » un flux de blocs codés qui aurait été reçu mais qui n'aurait pas été encodé en mode WPP, tout ceci au détriment d'une légère perte en efficacité de compression.

Dans le cas par exemple d'une conversion du mode WPP vers le mode séquentiel, il est d'abord procédé à un décodage entropique des blocs de l'image qui ont été codés en mode WPP. Il est ensuite procédé à un ré-encodage entropique desdits blocs décodés entropiquement, conformément au mode séquentiel.

L'inconvénient d'une conversion du type précité est qu'elle fonctionne uniquement lorsque le paramètre QP est constant dans l'image, c'est-à-dire que la valeur du paramètre QP est identique pour chaque bloc de l'image.

En effet, lorsque le paramètre QP varie d'un bloc à l'autre dans un flux considéré de blocs codés, il est nécessaire, en plus des étapes de décodage entropique et de ré-encodage entropique précitées, de décoder les éléments de syntaxe QPdelta représentatifs des variations du paramètre QP, puis de modifier la valeur de ces éléments de syntaxe de façon à ce que le paramètre QP de chaque bloc soit identique en mode WPP et en mode séquentiel. Une telle disposition s'avère nécessaire en particulier par le fait que le premier bloc d'une ligne hérite d'un paramètre QP qui n'est pas le même selon que le codeur fonctionne en mode séquentiel ou en mode WPP, comme cela a été décrit plus haut.

En outre, en supposant que le premier bloc d'une ligne ne comporte pas de résidu (CBP=0), le décodage de l'élément de syntaxe QPdelta ne pourra pas être effectué puisque cet élément de syntaxe n'aura pas été transmis. Ainsi, il peut donc arriver que le paramètre QP du premier bloc d'une ligne soit différent en mode WPP et non-WPP, ce qui induit un filtrage anti-blocs le long de la frontière de ce premier bloc qui est différent selon que le codeur fonctionne en mode séquentiel ou en mode WPP. Par conséquent, ledit premier bloc sera décodé différemment en mode séquentiel et en mode WPP, ce qui rendra l'image impossible à décoder, puisque le premier bloc codé d'une ligne ne sera pas celui attendu. Les valeurs des pixels dudit premier bloc codé étant susceptibles d'être réutilisées pour la prédiction intra des blocs suivants, mais étant différentes des valeurs attendues, c'est donc tout le processus de décodage de l'image qui sera erroné.

### Objet et résumé de l'invention

Un des buts de l'invention est de remédier à des inconvénients de l'état de la technique précité.

A cet effet, un objet de la présente invention concerne un procédé de codage et un procédé de décodage tels que définis dans les revendications 1 et 5.

Une telle disposition permet de produire une image codée sur laquelle il est possible d'effectuer un transcodage sans erreur d'ensembles de blocs qui ont été codés séquentiellement en des ensembles de blocs qui ont été codés en parallèle et inversement, en particulier dans le cas où un paramètre de compression, tel que par exemple le paramètre de quantification, varie d'un bloc à l'autre dans une image considérée.

Une telle disposition permet également de bénéficier non seulement des performances de compression propre au mode séquentiel mais aussi de la rapidité de temps de traitement du codeur/décodeur, une fois l'image convertie en mode WPP.

Dans le cas où la valeur de prédiction de paramètre de quantification correspond à un paramètre de quantification associé au dernier sous-bloc du premier bloc de la ligne précédente, une telle disposition a pour avantage de permettre de déterminer la valeur de prédiction du paramètre de compression dès le début du traitement de l'ensemble de blocs précédent (par exemple, ligne de blocs supérieure à la ligne de blocs courante), ce qui minimise ainsi le délai d'attente pour coder l'ensemble de blocs courant (ligne de blocs courante).

Dans le cas où la valeur de prédiction de paramètre de quantification correspond à un paramètre de quantification associé au dernier sous-bloc du deuxième bloc de la ligne précédente, une telle disposition a pour avantage de permettre un certain apprentissage statistique de la valeur du paramètre de compression sur les données de l'ensemble de blocs précédant le bloc courant. L'efficacité de la prédiction est ainsi rendue plus élevée.

Dans le cas où l'image est codée conformément à la norme HEVC, un bloc est un bloc de codage et un sous-bloc est un bloc de transformée.

Corrélativement, l'invention concerne encore un dispositif de codage et un dispositif de décodage tels que définis dans les revendications 2 et 6.

L'invention vise également un programme d'ordinateur comportant des instructions pour l'exécution des étapes du procédé de codage ou de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif de codage, le procédé de décodage, le dispositif de décodage et les programmes d'ordinateur précités présentent au moins les mêmes avantages que ceux conférés par le procédé de codage selon la présente invention.

### Brève description des dessins

D'autres caractéristiques et avantages apparaîtront à la lecture de deux modes de réalisation préférés décrits en référence aux figures dans lesquelles:
- la figure 1 représente un schéma de codage d'image de l'art antérieur,
- la figure 2A représente les principales étapes du procédé de codage selon l'invention,
- la figure 2B représente en détail le codage mis en oeuvre dans le procédé de codage de la figure 2A,
- la figure 3A représente un mode de réalisation d'un dispositif de codage selon l'invention,
- la figure 3B représente un module de codage du dispositif de codage de la figure 3A,
- la figure 4 représente un schéma de codage/décodage d'image de type séquentiel,
- la figure 5 représente un exemple de partitionnement d'un bloc de l'image courante en sous-blocs,
- la figure 6A représente les principales étapes du procédé de décodage selon l'invention,
- la figure 6B représente en détail le décodage mis en oeuvre dans le procédé de décodage de la figure 6A,
- la figure 7A représente un mode de réalisation d'un dispositif de décodage selon l'invention,
- la figure 7B représente un module de décodage du dispositif de décodage de la figure 7A.

### Description détaillée d'un mode de réalisation de la partie codage

Un mode de réalisation de l'invention va maintenant être décrit, dans lequel le procédé de codage selon l'invention est utilisé pour coder une image ou une séquence d'images selon un flux binaire proche de celui qu'on obtient par un codage conforme par exemple à la norme en cours d'élaboration HEVC.

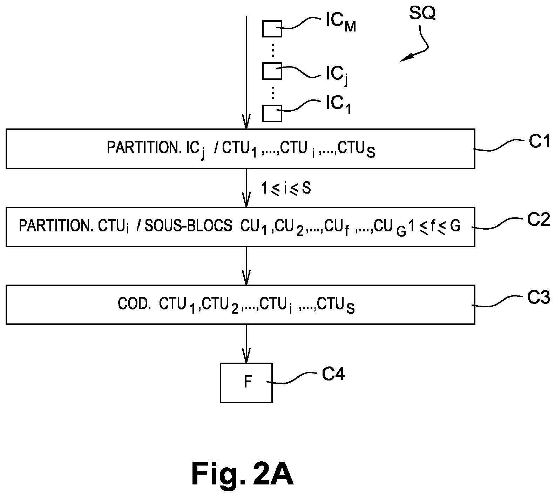

Dans ce mode de réalisation, le procédé de codage selon l'invention est par exemple implémenté de manière logicielle ou matérielle par modifications d'un codeur initialement conforme à la norme HEVC. Le procédé de codage selon l'invention est représenté sous la forme d'un algorithme comportant des étapes C1 à C4 telles que représentées à la **figure 2A****.**

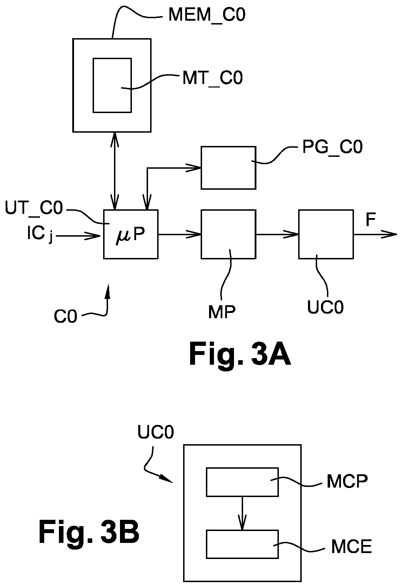

Selon le mode de réalisation de l'invention, le procédé de codage selon l'invention est implémenté dans un dispositif de codage CO représenté à la **figure 3A****.**

Comme illustré en **figure 3A**, un tel dispositif de codage comprend une mémoire MEM_CO comprenant une mémoire tampon MT_CO, une unité de traitement UT_CO équipée par exemple d'un microprocesseur µP et pilotée par un programme d'ordinateur PG_CO qui met en oeuvre le procédé de codage selon l'invention. A l'initialisation, les instructions de code du programme d'ordinateur PG_CO sont par exemple chargées dans une mémoire RAM avant d'être exécutées par le processeur de l'unité de traitement UT_CO.

Le procédé de codage représenté sur la **figure 2A** s'applique à toute image courante d'une séquence SQ d'images à coder.

Au cours d'une première étape C1 représentée à la **figure 2A****,** il est procédé, de façon connue en soi, au partitionnement d'une image courante lCⱼ appartenant à la séquence SQ d'images IC₁, ..., ICⱼ,..., IC_{M}, en une pluralité de blocs CTU₁, CTU₂, ..., CTUᵢ,..., CTUs par exemple de taille 64x64 pixels (1≤i≤S). Une telle étape de partitionnement est mise en oeuvre par un module logiciel de partitionnement MP représenté sur la **figure 3A****,** lequel module est piloté par le microprocesseur µP de l'unité de traitement UT_CO.

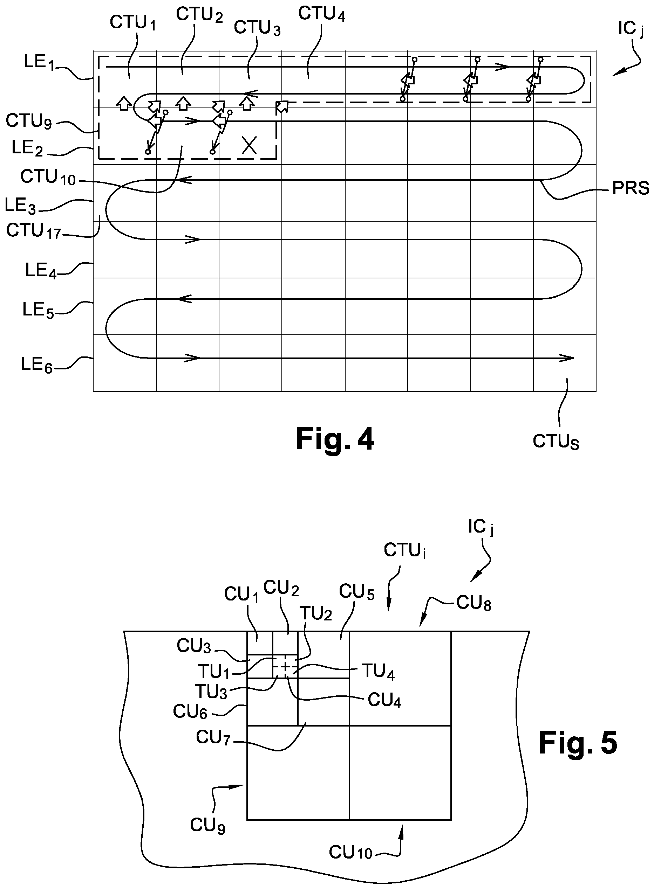

L'image ICⱼ ainsi partitionnée est représentée à la **figure 4****.**

Il convient de noter qu'au sens de l'invention, le terme « bloc » signifie unité de codage (de l'anglais « coding unit »). Cette dernière terminologie est notamment utilisée dans la norme HEVC, par exemple dans le document « B. Bross, W.-J. Han, J.-R. Ohm, G. J. Sullivan, and T. Wiegand, "High efficiency vidéo coding (HEVC) text spécification draft 6," document JCTVC-H1003 of JCT-VC, San Jose CA, USA, February 2012».

En particulier, une telle unité de codage regroupe des ensembles de pixels de forme rectangulaire ou carrée, encore appelés blocs, macroblocs, ou bien des ensembles de pixels présentant d'autres formes géométriques.

Lesdits blocs CTU₁, CTU₂, ..., CTUᵢ,.... CTUs sont aptes à contenir un ou plusieurs symboles, lesdits symboles faisant partie d'un ensemble prédéterminé de symboles.

Au cours d'une étape C2 représentée à la **figure 2A****,** pour un bloc courant CTUᵢ préalablement sélectionné, le module de partitionnement MP partitionne ledit bloc en une pluralité de blocs plus petits appelés blocs de codage CU₁, CU₂,..., CU_{f},..., CU_{G} avec 1≤f≤G. Un tel partitionnement respecte une arborescence de type « quadtree », telle que décrite plus haut dans la description. D'autres types d'arborescence peuvent bien sûr être envisagés.

L'étape C2 est réitérée pour l'ensemble des blocs CTU₁, CTU₂,..., CTUs.

Un exemple de partitionnement du bloc CTUᵢ est représenté sur la **figure** 5. Dans cet exemple, le bloc CTUᵢ est partitionné selon une arborescence de type « quadtree » en quatre blocs CU₁ à CU₁₀.

En référence à la **figure 2A****,** il est procédé, au cours d'une étape C3, au codage des blocs CTU₁, CTU₂, ..., CTUᵢ,.... CTUs selon un ordre de parcours prédéterminé, qui est par exemple du type raster scan précité. Dans l'exemple représenté sur la **figure 4****,** les blocs CTU₁, CTU₂, ..., CTUᵢ,.... CTUs sont codés les uns après les autres, de la gauche vers la droite, comme indiqué par la flèche PRS.

Un tel codage est du type séquentiel et est mis en oeuvre par un module de codage UCO telle que représenté sur la **figure 3A****,** lequel module est piloté par le microprocesseur µP de l'unité de traitement UT_CO. De façon connue en tant que telle, la mémoire tampon MT_CO du codeur CO est adaptée pour contenir les probabilités d'apparition de symboles telles que progressivement remises à jour au fur et à mesure du codage d'un bloc courant.

Comme représenté plus en détail sur la **figure 3B****,** le module de codage UCO comprend :
- un module de codage prédictif d'un bloc courant par rapport à au moins un bloc précédemment codé et décodé, notée MCP;
- un module de codage entropique dudit bloc courant par utilisation d'au moins une probabilité d'apparition de symbole calculée pour ledit bloc précédemment codé et décodé, notée MCE.

Le module de codage prédictif MCP est un module logiciel qui est apte à effectuer un codage prédictif du bloc courant, selon les techniques de prédiction classiques, telles que par exemple en mode Intra et/ou Inter.

Le module de codage entropique MCE est quant à lui de type CABAC, mais modifié selon la présente invention comme cela sera décrit plus loin dans la description.

En variante, le module de codage entropique MCE pourrait être un codeur de Huffman connu en tant que tel.

Dans l'exemple représenté sur la **figure 4****,** le module UCO code les blocs de la première ligne LE₁, de gauche à droite. Lorsqu'il parvient au dernier bloc de la première ligne LE₁, il passe au premier bloc de la deuxième ligne LE₂. Lorsqu'il parvient au dernier bloc de la deuxième ligne LE₂, il passe au premier bloc de la troisième ligne LE₃. Lorsqu'il parvient au dernier bloc de la troisième ligne LE₃, il passe au premier bloc de la quatrième ligne LE₄, et ainsi de suite jusqu'à ce que le dernier bloc de l'image courante ICⱼ soit codé.

D'autres types de parcours que celui qui vient d'être décrit ci-dessus sont bien sûr possibles. Ainsi, il est possible de découper l'image ICⱼ en plusieurs sous-images appelées slices et d'appliquer indépendamment un découpage de ce type sur chaque sous-image. Il est également possible pour le module de codage UCO de traiter non pas une succession de lignes, comme expliqué ci-dessus, mais une succession de colonnes. Il est également possible de parcourir les lignes ou colonnes dans un sens ou dans l'autre.

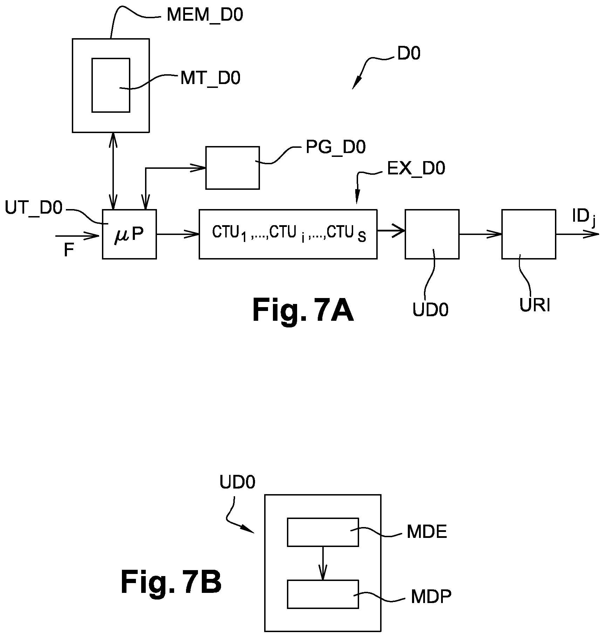

En référence à la **figure 2A****,** au cours d'une étape C4, il est procédé à la construction un flux F qui est apte à être converti en mode WPP. Le flux F est ensuite transmis par un réseau de communication (non représenté), à un terminal distant. Celui-ci comporte le décodeur DO représenté à la **figure 7A****.**

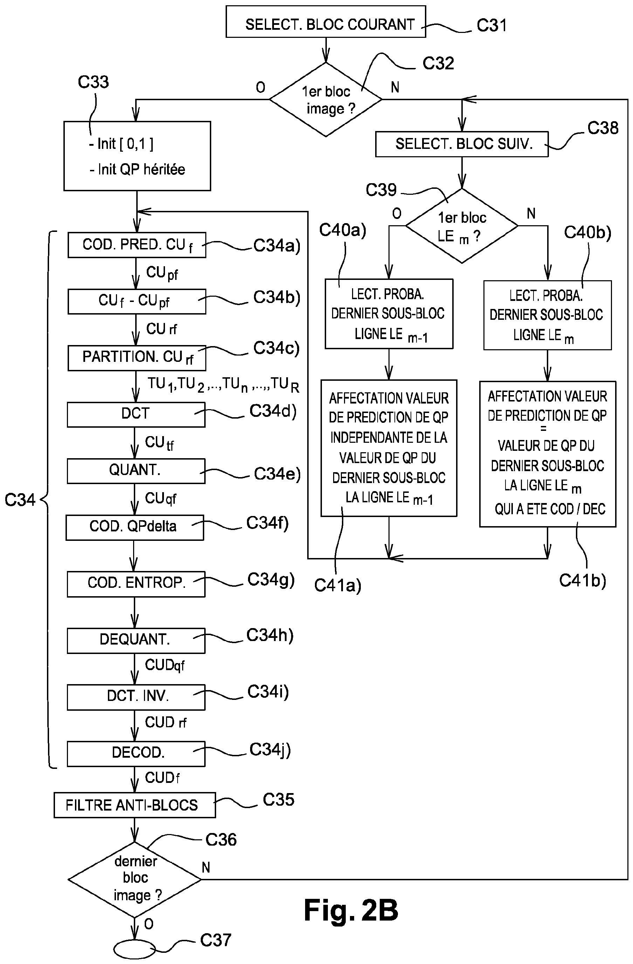

On va maintenant décrire, en référence à la **figure 2B****,** les différentes sous-étapes spécifiques de l'invention, telles que mises en oeuvre lors de l'étape C3 de codage précitée, dans le module de codage UCO représenté sur les **figures 3A** et **3B****.**

Au cours d'une étape C31 représentée à la **figure 2B****,** le module de codage UCO sélectionne comme bloc courant le premier sous-bloc à coder d'un bloc CTUᵢ d'une ligne LEₘ courante représentée à la **figure 4****,** telle que par exemple la première ligne LE₁. Dans la suite de la description, ce sous-bloc sera appelé bloc.

Au cours d'une étape C32 représentée à la **figure 2B****,** le module de codage UCO teste si le bloc courant est le premier bloc (situé en haut et à gauche) de l'image ICⱼ qui a été découpée en blocs, puis en sous-blocs à l'étape C1 précitée.

Si tel est le cas, au cours d'une étape C33 représentée à la **figure 2B****,** le module de codage entropique MCE procède à une initialisation des probabilités d'apparition de symboles.

Au cours de cette même étape C33 représentée à la **figure 2B****,** il est procédé à l'initialisation d'une valeur de paramètre de compression prédite. Le paramètre de compression considéré est le paramètre de quantification QP. Selon la norme HEVC, la valeur de paramètre QP prédite est initialisée à la valeur QPslice.

Si à la suite de l'étape C32 précitée, le bloc courant n'est pas le premier bloc de l'image lCⱼ, il est testé, au cours d'une étape C39 qui sera décrite ultérieurement dans la suite de la description, si le bloc courant est le premier bloc de la ligne LEₘ considérée.

Au cours d'une étape C34 représentée à la **figure 2B****,** il est procédé au codage du premier bloc courant CU₁ de la première ligne LE₁ représenté sur la **figure 4****.** Une telle étape C34 comprend une pluralité de sous-étapes C34a) à C34j) qui vont être décrites ci-dessous.

Au cours d'une première sous-étape C34a) représentée à la **figure 2B****,** le module prédictif MCP de la **figure 3B** procède au codage prédictif du bloc courant CU₁ par des techniques connues de prédiction intra et/ou inter, au cours duquel le bloc CU₁ est prédit par rapport à au moins un bloc précédemment codé puis décodé.

Il va de soi que d'autres modes de prédiction intra tels que proposé dans la norme HEVC sont possibles.

Le bloc courant CU₁ peut être également soumis à un codage prédictif en mode inter, au cours duquel le bloc courant est prédit par rapport à un bloc issu d'une image précédemment codée puis décodée. D'autres types de prédiction sont bien entendu envisageables. Parmi les prédictions possibles pour un bloc courant, la prédiction optimale est choisie selon un critère débit distorsion bien connu de l'homme du métier.

Ladite sous-étape de codage prédictif précitée permet de construire un bloc prédit CUₚ₁ qui est une approximation du bloc courant CU₁. Les informations relatives à ce codage prédictif seront ultérieurement inscrites dans le flux F transmis au décodeur DO. De telles informations comprennent notamment le type de prédiction (inter ou intra), et le cas échéant, le mode de prédiction intra, le type de partitionnement d'un bloc ou macrobloc si ce dernier a été partitionné, l'indice d'image de référence et le vecteur de déplacement utilisés dans le mode de prédiction inter. Ces informations sont compressées par le codeur CO.

Au cours d'une sous-étape suivante C34b) représentée à la **figure 2B****,** il est procédé à la soustraction du bloc prédit CUₚ₁ du bloc courant CU₁ pour produire un bloc résidu Clin.

Au cours d'une sous-étape suivante C34c) représentée à la **figure 2B****,** il est procédé au partitionnement du bloc résidu CUᵣ₁ en blocs de transformée TU₁, TU₂,..., TUₙ, ..., TU_{R}, avec 1≤n≤R. Dans l'exemple représenté sur la **figure 5****,** le bloc résidu CUᵣ₁ a été partitionné en quatre blocs de transformée TU₁, TU₂, TU₃, TU₄.

Au cours d'une sous-étape suivante C34d) représentée à la **figure 2B****,** il est procédé à la transformation de chaque bloc de transformée du bloc résidu CUᵣ₁ selon une opération classique de transformation directe telle que par exemple une transformation en cosinus discrètes de type DCT, pour produire un bloc transformé CUti.

Au cours d'une sous-étape suivante C34e) représentée à la **figure 2B****,** il est procédé à la quantification du bloc transformé CUti selon une opération classique de quantification, telle que par exemple une quantification scalaire qui utilise un paramètre de quantification QP, comme cela est le cas dans la norme HEVC. Un bloc de coefficients quantifiés CU_{q1} est alors obtenu.

Au cours d'une sous-étape suivante C34f) représentée à la **figure 2B****,** si le bloc de transformée TUₙ courant est le premier bloc de transformée du bloc courant CTUᵢ qui contient un résidu (CBF=1), tel que le bloc TU₁ sur la **figure 5****,** il est procédé au codage de l'élément de syntaxe QPdelta qui est représentatif de la différence entre le paramètre QP du sous-bloc précédemment codé puis décodé, appelé « QP prédit », et le paramètre QP du sous-bloc courant.

Au cours d'une sous-étape suivante C34g) représentée à la **figure 2B****,** il est procédé au codage entropique du bloc de coefficients quantifiés CU_{q1}. Dans le mode préféré de réalisation, il s'agit d'un codage entropique CABAC. Une telle étape consiste à :
a) lire le ou les symboles de l'ensemble prédéterminé de symboles qui sont associés audit bloc courant,
b) associer des informations numériques, telles que des bits, au(x) symbole(s) lu(s).

Au cours d'une sous-étape suivante C34h) représentée à la **figure 2B****,** il est procédé à la déquantification du bloc CU_{q1} selon une opération classique de déquantification, qui est l'opération inverse de la quantification effectuée à l'étape C34e). Un bloc de coefficients déquantifiés CUD_{q1} est alors obtenu.

Au cours d'une sous-étape suivante C34i) représentée à la **figure 2B****,** il est procédé à la transformation inverse du bloc de coefficients déquantifiés CUD_{q1} qui est l'opération inverse de la transformation directe effectuée à l'étape C34d) ci-dessus. Un bloc résidu décodé CUDᵣ₁ est alors obtenu.

Au cours d'une sous-étape suivante C34j) représentée à la **figure 2B****,** il est procédé à la construction du bloc décodé CUD₁ en ajoutant au bloc prédit CUₚ₁ le bloc résidu décodé CUDᵣ₁. Il est à noter que ce dernier bloc est le même que le bloc décodé obtenu à l'issue du procédé de décodage de l'image lCⱼ qui sera décrit plus loin dans la description. Le bloc décodé CUD₁ est ainsi rendu disponible pour être utilisé par le module de codage UCO représenté sur les **figures 3A** et **3B****.**

A l'issue de l'étape de codage C34 précitée, le module de codage entropique MCE tel que représenté à la **figure 3B** contient toutes les probabilités telles que progressivement remises à jour au fur et à mesure du codage du premier bloc. Ces probabilités correspondent aux différents éléments de syntaxes possibles et aux différents contextes de codage associés.

Au cours d'une étape suivante C35 représentée à la **figure 2B****,** le bloc décodé CUD₁ est filtré au moyen d'un filtre anti-blocs conformément à la norme HEVC. En particulier, le filtre anti-blocs utilise le paramètre de quantification QP du bloc de transformée TUₙ courant pour déterminer la force de filtrage qu'il convient d'appliquer.

Au cours d'une étape suivante C36 représentée à la **figure 2B****,** le module de codage UCO teste si le bloc courant de la ligne LEₘ qui vient d'être codé est le dernier bloc de l'image lCⱼ.

Si le bloc courant est le dernier bloc de l'image lCⱼ, au cours d'une étape suivante C37 représentée à la **figure 2B****,** il est mis fin au procédé de codage.

Si tel n'est pas le cas, il est procédé, au cours d'une étape suivante C38 représentée à la **figure 2B****,** à la sélection du bloc suivant CUf à coder conformément à l'ordre de parcours représenté par la flèche PRS sur la figure 4.

Au cours d'une étape suivante C39 représentée à la **figure 2B****,** il est testé si le bloc courant est le premier bloc de la ligne LEₘ considérée.

Si tel est le cas, au cours d'une étape C40a) de codage entropique représentée à la **figure 2B****,** le module de codage entropique MCE de la **figure 3B** commence à coder le premier bloc courant de la ligne LEₘ considérée avec les probabilités d'apparition de symboles calculées à l'issue du codage puis du décodage du dernier sous-bloc du dernier bloc CTU_{d} (1≤d≤S) de la ligne précédente LEₘ₋₁.

En référence à la **figure 2B****,** au cours d'une étape C41a) de codage prédictif d'un paramètre de compression associé audit premier bloc courant, tel que le paramètre de quantification QP, le module de codage prédictif MCP de la **figure 3B** procède à l'affectation d'une valeur de prédiction de paramètre de compression qui est indépendante de la valeur du paramètre de compression associé audit dernier sous-bloc du dernier bloc CTU_{d} (1≤d≤S) de la ligne précédente LEₘ₋₁.

Selon une première variante de l'étape C41a), la valeur de prédiction du paramètre de quantification QP affectée est celle du paramètre de quantification associé au dernier sous-bloc du premier bloc CTU de la ligne précédente LEₘ₋₁. En référence à la **figure 4****,** si le bloc courant est par exemple le premier sous-bloc du bloc CTU₁₇ de la troisième ligne LE₃, la valeur de prédiction du paramètre de quantification QP affectée est celle du paramètre de quantification associé au dernier sous-bloc du premier bloc CTUs de la deuxième ligne LE₂.

Selon une deuxième variante de l'étape C41a), la valeur de prédiction du paramètre de quantification QP affectée est celle du paramètre de quantification associé au dernier sous-bloc du deuxième bloc CTU de la ligne précédente LEₘ₋₁. En référence à la **figure 4****,** si le bloc courant est par exemple le premier sous-bloc du bloc CTU₁₇ de la troisième ligne LE₃, la valeur de prédiction du paramètre de quantification QP affectée est celle du paramètre de quantification associé au dernier sous-bloc du deuxième bloc CTU₁₀ de la deuxième ligne LE2.

Selon une troisième variante de l'étape C41a), présentée uniquement à titre illustratif, la valeur de prédiction du paramètre de quantification QP affectée est celle du paramètre de quantification associé au premier sous-bloc du premier bloc CTU de l'image ICⱼ. En référence à la **figure 4****,** si le bloc courant est par exemple le premier sous-bloc du bloc CTU₁₇ de la troisième ligne LE₃, la valeur de prédiction du paramètre de quantification QP affectée est celle du paramètre de quantification associé au premier sous-bloc du premier bloc CTU₁ de la première ligne LE₁.

Selon une quatrième variante de l'étape C41a), présentée uniquement à titre illustratif, dans le cas où l'image lCⱼ a été découpée en plusieurs slices, la valeur de prédiction du paramètre de quantification QP affectée au premier bloc courant est la valeur QPslice du slice dans lequel se trouve ledit premier bloc courant.

A la suite de l'étape C41a), le bloc courant est codé puis décodé par itération des étapes C34 à C37 décrites plus haut.

Si à la suite de l'étape C39 précitée, le bloc courant n'est pas le premier bloc de la ligne LEₘ considérée, il est procédé, au cours d'une étape C40b) de codage entropique représentée à la **figure 2B****,** à la lecture des probabilités issues du dernier sous-bloc précédemment codé et décodé qui se trouve sur la même ligne LEₘ que le bloc courant à coder, c'est-à-dire le dernier sous-bloc codé puis décodé du bloc CTU qui est situé immédiatement à gauche du bloc courant. Une telle étape est effectuée par le module de codage entropique MCE représenté sur la **figure 3B****.**

En référence à la **figure 2B****,** il est ensuite procédé, au cours d'une étape C41b) de codage prédictif d'un paramètre de compression associé audit bloc courant, tel que le paramètre de quantification QP, à l'affectation d'une valeur de prédiction de paramètre QP à la valeur du paramètre QP du dernier sous-bloc précédemment codé et décodé qui se trouve sur la même ligne LEₘ que le bloc courant à coder, c'est-à-dire le dernier sous-bloc codé puis décodé du bloc CTU qui est situé immédiatement à gauche du bloc courant. Une telle étape est effectuée par le module de codage prédictif MCP représenté sur la **figure 3B****.**

A la suite de l'étape C41b), le bloc courant est codé puis décodé par itération des étapes C34 à C37 décrites plus haut.

Les étapes de codage qui viennent d'être décrites ci-dessus sont mises en oeuvre pour tous les blocs CTU₁, CTU₂, ..., CTUᵢ,..., CTUs à coder de l'image courante lCⱼ considérée.

### Description détaillée d'un mode de réalisation de la partie décodage

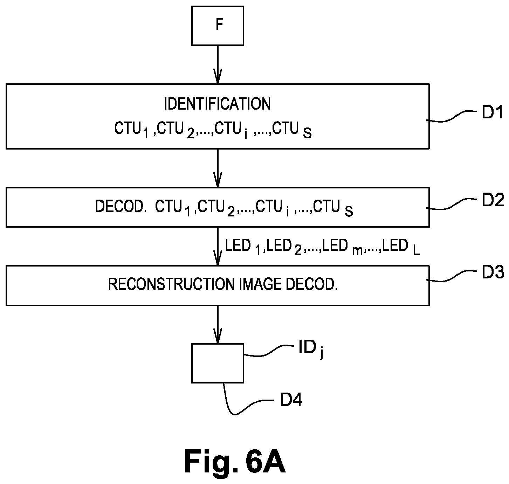

Un mode de réalisation du procédé de décodage selon l'invention va maintenant être décrit, dans lequel le procédé de décodage est implémenté de manière logicielle ou matérielle par modifications d'un décodeur initialement conforme à la norme HEVC. Le procédé de décodage selon l'invention est représenté sous la forme d'un algorithme comportant des étapes D1 à D4 telles que représentées à la **figure 6A****.**

Comme illustré en **figure 7A****,** un décodeur selon l'invention comprend une mémoire MEM_DO comprenant une mémoire tampon MT_DO, une unité de traitement UT_DO équipée par exemple d'un microprocesseur µP et pilotée par un programme d'ordinateur PG_DO qui met en oeuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 6A** s'applique à toute image courante d'une séquence SQ d'images à décoder.

A cet effet, des informations représentatives de l'image courante lCⱼ à décoder sont identifiées dans le flux F reçu au décodeur.

En référence à la **figure 6A****,** la première étape de décodage D1 est l'identification dans ledit flux F des blocs CTU₁, CTU₂, ..., CTUᵢ,.... CTUs codés précédemment conformément au parcours PRS représenté sur la **figure 4****.**

En référence à la **figure 6A****,** la deuxième étape de décodage D2 est le décodage de chacun desdits L sous-ensembles LE₁, LE₂,...,LEₘ,..., LE_{L} de blocs, les blocs d'un sous-ensemble considéré étant aptes à être décodés selon l'ordre de parcours séquentiel PRS prédéterminé, comme représenté sur la **figure 4****.** Dans l'exemple représenté sur la **figure 4****,** les blocs d'un sous-ensemble LEm courant sont décodés les uns après les autres, de la gauche vers la droite, comme indiqué par la flèche PRS. A l'issue de l'étape D2, les sous-ensembles de blocs décodés LED₁, LED₂,..., LED_{M}, .... LED_{L} sont obtenus.

Un tel décodage est de type séquentiel et, par conséquent, est effectué à l'aide d'un seul module de décodage UDO telle que représenté sur la **figure 7A****,** ledit module étant piloté par le microprocesseur µP de l'unité de traitement UT_DO. De façon connue en tant que telle, la mémoire tampon MT_DO du décodeur DO est adaptée pour contenir les probabilités d'apparition de symboles telles que progressivement remises à jour au fur et à mesure du décodage d'un bloc courant.

Comme représenté plus en détail sur la **figure 7B****,** le module de décodage UDO comprend :
- un module de décodage entropique dudit bloc courant par apprentissage d'au moins une probabilité d'apparition de symbole calculée pour au moins un bloc précédemment décodé, notée MDE,
- un module de décodage prédictif d'un bloc courant par rapport audit bloc précédemment décodé, notée MDP.

Le module de décodage prédictif MDP est apte à effectuer un décodage prédictif du bloc courant, selon les techniques de prédiction classiques, telles que par exemple en mode Intra et/ou Inter.

Le module de décodage entropique MDE est quant à lui de type CABAC, mais modifié selon la présente invention comme cela sera décrit plus loin dans la description.

En variante, le module de décodage entropique MDE pourrait être un décodeur de Huffman connu en tant que tel.

Dans l'exemple représenté sur la **figure 4****,** le module UDO décode les blocs de la première ligne LE₁, de gauche à droite. Lorsqu'il parvient au dernier bloc de la première ligne LE₁, il passe au premier bloc de la deuxième ligne LE₂. Lorsqu'il parvient au dernier bloc de la deuxième ligne LE₂, il passe au premier bloc de la troisième ligne LE₃. Lorsqu'il parvient au dernier bloc de la troisième ligne LE₃, il passe au premier bloc de la quatrième ligne LE₄, et ainsi de suite jusqu'à ce que le dernier bloc de l'image courante lCⱼ soit décodé.

D'autres types de parcours que celui qui vient d'être décrit ci-dessus sont bien sûr possibles. Ainsi, il est possible de découper l'image lCⱼ en plusieurs sous-images appelées slices et d'appliquer indépendamment un découpage de ce type sur chaque sous-image. Il est également possible pour le module de décodage UDO de traiter non pas une succession de lignes, comme expliqué ci-dessus, mais une succession de colonnes. Il est également possible de parcourir les lignes ou colonnes dans un sens ou dans l'autre.

En référence à la **figure 6A****,** la troisième étape de décodage D3 est la reconstruction d'une image décodée IDⱼ à partir de chaque sous-ensemble décodé LED₁, LED₂,..., LEDₘ,..., LED_{L} obtenu à l'étape de décodage D2. Plus précisément, les blocs décodés de chaque sous-ensemble décodé LED₁, LED₂,..., LEDₘ,..., LED_{L} sont transmis à une unité URI de reconstruction d'image telle que représentée à la **figure 7A****,** ladite unité étant pilotée par le microprocesseur µP de l'unité de traitement UT_DO. Au cours de cette étape D3, l'unité URI écrit les blocs décodés dans une image décodée au fur et à mesure que ces blocs deviennent disponibles.

Au cours d'une quatrième étape de décodage D4 représentée à la **figure 6A****,** une image IDⱼ entièrement décodée est délivrée par l'unité URI représentée **figure 7A****.**

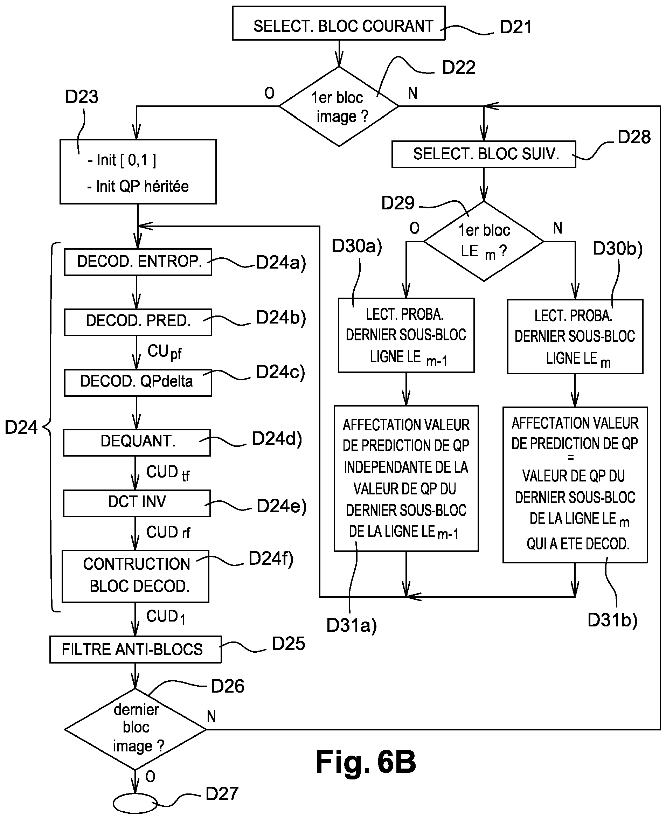

On va maintenant décrire, en référence à la **figure 6B****,** les différentes sous-étapes spécifiques de l'invention, telles que mises en oeuvre lors de l'étape D2 de décodage séquentiel précitée, dans le module de décodage UDO représenté sur les **figures 7A** et **7B****.**

Au cours d'une étape D21 représentée à la **figure 6B****,** le module de décodage UDO sélectionne comme bloc courant le premier sous-bloc à décoder d'un bloc CTUᵢ d'une ligne LEₘ courante représentée à la **figure 4****,** telle que par exemple la première ligne LE₁. Dans la suite de la description, ce sous-bloc sera appelé bloc.

Au cours d'une étape D22 représentée à la **figure 6B****,** le module de décodage UDO teste si le bloc courant est le premier bloc (situé en haut et à gauche) de l'image lCⱼ qui a été précédemment codée.

Si tel est le cas, au cours d'une étape D23 représentée à la **figure 6B****,** le module de décodage entropique MDE procède à une initialisation des probabilités d'apparition de symboles. Une telle initialisation est identique à celle effectuée au codage à l'étape C33 représentée sur la **figure 2B****.**

Au cours de cette même étape D23 représentée à la **figure 6B****,** il est procédé à l'initialisation d'une valeur de paramètre de compression prédite. Le paramètre de compression considéré est le paramètre de quantification QP. Selon la norme HEVC, la valeur de paramètre QP prédite est initialisée à la valeur QPslice.

Si à la suite de l'étape D22 précitée, le bloc courant n'est pas le premier bloc de l'image lCⱼ, il est testé, au cours d'une étape D29 qui sera décrite ultérieurement dans la suite de la description, si le bloc courant est le premier bloc de la ligne LEₘ considérée.

Au cours d'une étape D24 représentée à la **figure 6B****,** il est procédé au décodage du premier bloc courant CU₁ de la première ligne LE₁ représenté sur la **figure 4****.** Une telle étape D24 comprend une pluralité de sous-étapes D24a) à D24f) qui vont être décrites ci-dessous.

Au cours d'une première sous-étape D24a) représentée à la **figure 6B****,** le module de décodage entropique MDE de la **figure 7B** procède au décodage entropique des éléments de syntaxe liés au bloc courant. Une telle étape consiste principalement à :
a) lire les bits contenus dans le flux qui sont associés à ladite première ligne LE₁,
b) reconstruire les symboles à partir des bits lus.

Plus précisément, les éléments de syntaxe liés au bloc courant sont décodés par le module MDE de décodage entropique CABAC tel que représenté à la **figure 7B****.** Ce dernier décode le flux de bits F du fichier compressé pour produire les éléments de syntaxe, et, en même temps, remet à jour ses probabilités de façon à ce que, au moment où celui-ci décode un symbole, les probabilités d'apparition de ce symbole soient identiques à celles obtenues lors du codage de ce même symbole lors de l'étape de codage entropique précitée C34g) représentée à la **figure 2B****.**

Au cours d'une sous-étape suivante D24b) représentée à la **figure 6B****,** le module de décodage prédictif MDP de la **figure 7B** procède au décodage prédictif du bloc courant CU₁ par des techniques connues de prédiction intra et/ou inter, au cours duquel le bloc CU₁ est prédit par rapport à au moins un bloc précédemment décodé.

Il va de soi que d'autres modes de prédiction intra tels que proposés dans la norme HEVC sont possibles.

Le bloc courant CU₁ peut être également soumis à un décodage prédictif en mode inter, au cours duquel le bloc courant est prédit par rapport à un bloc issu d'une image précédemment décodée. D'autres types de prédiction sont bien entendu envisageables. Parmi les prédictions possibles pour un bloc courant, la prédiction optimale est choisie selon un critère débit distorsion bien connu de l'homme du métier.

Ladite sous-étape de décodage prédictif précitée permet de construire un bloc prédit CUₚ₁ qui est une approximation du bloc courant CU₁.

Au cours d'une sous-étape suivante D24c) représentée à la **figure 6B****,** si le bloc de transformée TUₙ courant est le premier bloc de transformée du bloc courant CTUⱼ qui contient un résidu (CBF=1), tel que le bloc TU₁ sur la **figure 5****,** il est procédé au décodage de l'élément de syntaxe QPdelta et la valeur du paramètre QP du sous-bloc courant est calculée par ajout de l'élément de syntaxe QPdelta décodé à la valeur du paramètre QP du sous-bloc précédemment décodé, appelé « QP prédit ».

Au cours d'une sous-étape suivante D24d) représentée à la **figure 6B****,** il est procédé à la déquantification du bloc quantifié CU_{q1} selon une opération classique de déquantification qui est l'opération inverse de la quantification effectuée à l'étape C34e) précitée représentée à la **figure 2B****,** pour produire un bloc déquantifié décodé CUDt₁.

Au cours d'une sous-étape suivante D24e) représentée à la **figure 6B****,** il est procédé à la transformation inverse du bloc déquantifié CUDt₁ qui est l'opération inverse de la transformation directe effectuée à l'étape C34d) précitée représentée à la figure 2B. Un bloc résidu décodé CUDᵣ₁ est alors obtenu.

Au cours d'une sous-étape suivante D24f) représentée à la figure 6B, il est procédé à la construction du bloc décodé CUD₁ en ajoutant au bloc prédit CUₚ₁ le bloc résidu décodé CUDᵣ₁. Le bloc décodé CUD₁ est ainsi rendu disponible pour être utilisé par le module de décodage UDO représenté sur les **figures 7A** et **7B****.**

A l'issue de l'étape de décodage D24 précitée, le module de décodage entropique MDE tel que représenté à la **figure 7B** contient toutes les probabilités telles que progressivement remises à jour au fur et à mesure du décodage du premier bloc. Ces probabilités correspondent aux différents éléments de syntaxes possibles et aux différents contextes de décodage associés.

Au cours d'une étape suivante D25 représentée à la **figure 6B**, le bloc décodé CUD₁ est filtré au moyen d'un filtre anti-blocs conformément à la norme HEVC. En particulier, le filtre anti-blocs utilise le paramètre de quantification QP du bloc de transformée TUₙ courant pour déterminer la force de filtrage qu'il convient d'appliquer.

Au cours d'une étape suivante D26 représentée à la **figure 6B**, le module de décodage UDO teste si le bloc courant CUD₁ qui vient d'être décodé est le dernier bloc contenu dans le flux F.

Si tel est le cas, au cours d'une étape D27 représentée à la **figure 6B**, il est mis fin au procédé de décodage.

Si tel n'est pas le cas, il est procédé, au cours de l'étape D28 représentée à la **figure 6B**, à la sélection du bloc suivant CUf à décoder conformément à l'ordre de parcours représenté par la flèche PRS sur la **figure 4****.**

Au cours d'une étape suivante D29 représentée à la **figure 6B**, il est testé si le bloc courant est le premier bloc de la ligne LEₘ considérée.

Si tel est le cas, au cours d'une étape D30a) de décodage entropique, le module de décodage entropique MDE de la **figure 7B** commence à décoder le premier bloc courant de la ligne LEₘ considérée avec les probabilités d'apparition de symboles calculées à l'issue du décodage du dernier sous-bloc du dernier bloc CTU_{d} (1≤d≤S) de la ligne précédente LEₘ₋₁.

En référence à la **figure 6B**, au cours d'une étape D31a) de décodage prédictif d'un paramètre de compression associé audit premier bloc courant, tel que le paramètre de quantification QP, le module de décodage prédictif MDP de la **figure 7B** procède à l'affectation d'une valeur de prédiction de paramètre de compression qui est indépendante de la valeur du paramètre de compression associé audit dernier sous-bloc du dernier bloc CTU_{d} (1≤d≤S) de la ligne précédente LEₘ₋₁.

Selon une première variante de l'étape D31a), la valeur de prédiction du paramètre de quantification QP affectée est celle du paramètre de quantification associé au dernier sous-bloc du premier bloc CTU de la ligne précédente LEₘ₋₁. En référence à la **figure 4****,** si le bloc courant est par exemple le premier sous-bloc du bloc CTU₁₇ de la troisième ligne LE₃, la valeur de prédiction du paramètre de quantification QP affectée est celle du paramètre de quantification associé au dernier sous-bloc du premier bloc CTUs de la deuxième ligne LE₂.

Selon une deuxième variante de l'étape D31a), la valeur de prédiction du paramètre de quantification QP affectée est celle du paramètre de quantification associé au dernier sous-bloc du deuxième bloc CTU de la ligne précédente LEₘ₋₁. En référence à la **figure 4****,** si le bloc courant est par exemple le premier sous-bloc du bloc CTU₁₇ de la troisième ligne LE₃, la valeur de prédiction du paramètre de quantification QP affectée est celle du paramètre de quantification associé au dernier sous-bloc du deuxième bloc CTU₁₀ de la deuxième ligne LE₂.

Selon une troisième variante de l'étape D31a), présentée uniquement à titre illustratif, la valeur de prédiction du paramètre de quantification QP affectée est celle du paramètre de quantification associé au premier sous-bloc du premier bloc CTU de l'image ICⱼ. En référence à la **figure 4****,** si le bloc courant est par exemple le premier sous-bloc du bloc CTU₁₇ de la troisième ligne LE₃, la valeur de prédiction du paramètre de quantification QP affectée est celle du paramètre de quantification associé au premier sous-bloc du premier bloc CTU₁ de la première ligne LE₁.

Selon une quatrième variante de l'étape D31a), présentée uniquement à titre illustratif, dans le cas où l'image lCⱼ a été découpée en plusieurs slices, la valeur de prédiction du paramètre de quantification QP affectée au premier bloc courant est la valeur QPslice du slice dans lequel se trouve ledit premier bloc courant.

A la suite de l'étape D31a), le bloc courant est décodé par itération des étapes D24 à D27 décrites plus haut.

Si à la suite de l'étape D29 précitée, le bloc courant n'est pas le premier bloc de la ligne LEₘ considérée, il est procédé, au cours d'une étape D30b) de décodage entropique représentée à la **figure 6B****,** à la lecture des probabilités issues du dernier sous-bloc précédemment décodé qui se trouve sur la même ligne LEₘ que le bloc courant à décoder, c'est-à-dire le dernier sous-bloc décodé du bloc CTU qui est situé immédiatement à gauche du bloc courant. Une telle étape est mise en oeuvre par le module de décodage entropique MDE représenté sur la **figure 7B****.**

En référence à la **figure 6B****,** il est ensuite procédé, au cours d'une étape D31b) de décodage prédictif d'un paramètre de compression associé audit bloc courant, tel que le paramètre de quantification QP, à l'affectation d'une valeur de prédiction de paramètre QP à la valeur du paramètre QP du dernier sous-bloc précédemment décodé qui se trouve sur la même ligne LEₘ que le bloc courant à décoder, c'est-à-dire le dernier sous-bloc décodé du bloc CTU qui est situé immédiatement à gauche du bloc courant. Une telle étape est mise en oeuvre par le module de décodage prédictif MDP représenté sur la **figure 7B****.**

A la suite de l'étape D31b), le bloc courant est décodé par itération des étapes D24 à D27 décrites plus haut.

Les étapes de décodage qui viennent d'être décrites ci-dessus sont mises en oeuvre pour tous les blocs CTU₁, CTU₂, ..., CTUᵢ,..., CTUs à décoder de l'image courante lCⱼ considérée.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de codage d'au moins une image (ICⱼ) comprenant les étapes de :
- partitionnement (C1, C2) de l'image en une pluralité de blocs (CTU₁, CTU₂, ..., CTUᵢ,.... CTUs) aptes à contenir des symboles appartenant à un ensemble prédéterminé de symboles, les blocs étant partitionnés en sous-blocs :
- codage entropique d'un bloc courant à partir d'au moins une probabilité d'apparition de symbole,
- codage prédictif d'un paramètre de quantification (QP) associé audit bloc courant, ledit procédé de codage étant **caractérisé en ce que** dans le cas (C39, O) où le bloc courant est le premier bloc à coder d'une ligne (LEₘ) de blocs consécutifs à coder, distincte de la première ligne (LE₁), il est procédé aux étapes de :
• détermination (C40a), lors de ladite étape de codage entropique, de probabilités d'apparition de symbole pour ledit premier bloc courant, lesdites probabilités étant celles qui ont été déterminées à l'issue du codage puis du décodage du dernier bloc de la ligne précédente (LEₘ₋₁),
• affectation (C41a)), lors de ladite étape de codage prédictif d'un paramètre de quantification associé audit premier bloc courant, d'une valeur de prédiction de paramètre de quantification correspondant à un paramètre de quantification associé au dernier sous-bloc du premier ou du deuxième bloc de la ligne précédente (LEₘ₋₁).

2. Dispositif de codage (CO) d'au moins une image, destiné à mettre en oeuvre le procédé de codage selon la revendication 1, ledit dispositif comprenant :
- des moyens (MP) de partitionnement de l'image en une pluralité de blocs (CTU) aptes à contenir des symboles appartenant à un ensemble prédéterminé de symboles, les blocs étant partitionnés en sous-blocs ;
- des moyens (MCE) de codage entropique d'un bloc courant à partir d'au moins une probabilité d'apparition de symbole,
- des moyens (MCP) de codage prédictif d'un paramètre de quantification (QP) associé audit bloc courant, ledit dispositif de codage étant **caractérisé en ce que**, dans le cas (C39, O) où le bloc courant est le premier bloc à coder d'une ligne (LEₘ) de blocs consécutifs à coder distincte de la première ligne (LE₁) :
• les moyens de codage entropique déterminent des probabilités d'apparition de symbole pour ledit premier bloc courant, lesdites probabilités étant celles qui ont été déterminées à l'issue du codage puis du décodage du dernier bloc de la ligne précédente (LEₘ₋₁),
• les moyens de codage prédictif d'un paramètre de quantification associé audit premier bloc courant affectent une valeur de prédiction de paramètre de quantification correspondant à un paramètre de quantification associé au dernier sous-bloc du premier ou du deuxième bloc de la ligne précédente (LEₘ₋₁).

3. Programme d'ordinateur comportant des instructions pour mettre en oeuvre le procédé de codage selon la revendication 1, lorsqu'il est exécuté sur un ordinateur.

4. Support d'enregistrement lisible par un ordinateur sur lequel est enregistré un programme d'ordinateur comprenant des instructions pour l'exécution des étapes du procédé de codage selon la revendication 1, lorsque ledit programme est exécuté par un ordinateur.

5. Procédé de décodage d'un flux (F) représentatif d'au moins une image codée, comprenant les étapes de :
- identification (D1) dans ledit flux d'une pluralité de blocs codés, lesdits blocs étant aptes à contenir des symboles appartenant à un ensemble prédéterminé de symboles, les blocs étant partitionnés en sous-blocs,
- décodage entropique d'un bloc codé courant à partir d'au moins une probabilité d'apparition de symbole,
- décodage prédictif d'un paramètre de quantification (QP) associé audit bloc codé courant, ledit procédé de décodage étant **caractérisé en ce que** dans le cas (D29, O) où le bloc courant est le premier bloc à décoder d'une ligne (LEₘ) de blocs consécutifs à décoder distincte de la première ligne (LE₁), il est procédé aux étapes de :
• détermination (D30a)), lors de ladite étape de décodage entropique, de probabilités d'apparition de symbole pour ledit premier bloc courant, lesdites probabilités étant celles qui ont été déterminées à l'issue du décodage du dernier bloc de la ligne précédente (LEₘ₋₁),
• affectation (D31a)), lors de ladite étape de décodage prédictif d'un paramètre de quantification associé audit premier bloc courant, d'une valeur de prédiction de paramètre de quantification correspondant à un paramètre de quantification associé au dernier sous-bloc du premier ou du deuxième bloc de la ligne précédente (LEₘ₋₁).

6. Dispositif de décodage d'un flux (F) représentatif d'au moins une image codée, destiné à mettre en oeuvre le procédé de décodage selon la revendication 5, ledit dispositif comprenant :
- des moyens (EX_DO) d'identification dans ledit flux d'une pluralité de blocs codés, lesdits blocs étant aptes à contenir des symboles appartenant à un ensemble prédéterminé de symboles, les blocs étant partitionnés en sous-blocs,
- des moyens de décodage entropique d'un bloc codé courant à partir d'au moins une probabilité d'apparition de symbole,
- des moyens de décodage prédictif d'un paramètre de quantification (QP) associé audit bloc codé courant, ledit dispositif de décodage étant **caractérisé en ce que** dans le cas (D29, O) où le bloc courant est le premier bloc à décoder d'une ligne (LEₘ) de blocs consécutifs à décoder distincte de la première ligne (LE₁),
• les moyens (MDE) de décodage entropique déterminent des probabilités d'apparition de symbole pour ledit premier bloc courant, lesdites probabilités étant celles qui ont été déterminées à l'issue du décodage du dernier bloc de la ligne précédente (LEₘ₋₁),
• les moyens (MDP) de décodage prédictif d'un paramètre de quantification associé audit premier bloc courant affectent une valeur de prédiction de paramètre de quantification correspondant à un paramètre de quantification associé au dernier sous-bloc du premier ou du deuxième bloc de la ligne précédente (LEₘ₋₁).

7. Programme d'ordinateur comportant des instructions pour mettre en oeuvre le procédé de décodage selon la revendication 5, lorsqu'il est exécuté sur un ordinateur.

8. Support d'enregistrement lisible par un ordinateur sur lequel est enregistré un programme d'ordinateur comprenant des instructions pour l'exécution des étapes du procédé de décodage selon la revendication 5, lorsque ledit programme est exécuté par un ordinateur.

## Patentansprüche

1. Verfahren zum Codieren mindestens eines Bildes (ICⱼ), umfassend die folgenden Schritte:
- Partitionieren (C1, C2) des Bildes in eine Mehrzahl von Blöcken (CTU₁, CTU₂, ..., CTUᵢ, ... , CTUₛ), die geeignet sind, Symbole zu enthalten, die zu einer vorbestimmten Menge von Symbolen gehören, wobei die Blöcke in Teilblöcke partitioniert sind:
- entropisches Codieren eines aktuellen Blocks ausgehend von mindestens einer Symbolauftrittswahrscheinlichkeit,
- prädiktives Codieren eines dem aktuellen Block zugeordneten Quantifizierungsparameters (QP), wobei das Verfahren zum Codieren **dadurch gekennzeichnet ist, dass** in dem Fall (C39, O), in dem der aktuelle Block der erste zu codierende Block einer Zeile (LEₘ) aus zu codierenden aufeinanderfolgenden Blöcken ist, die von der ersten Zeile (LE₁) verschieden ist, die folgenden Schritte vorgenommen werden:
• Bestimmen (C40a)), bei dem Schritt des entropischen Codierens, von Symbolauftrittswahrscheinlichkeiten für den aktuellen ersten Block, wobei die Wahrscheinlichkeiten diejenigen sind, die nach dem Codieren und anschließenden Decodieren des letzten Blocks der vorhergehenden Zeile (LEₘ₋₁) bestimmt worden sind,
• Zuweisen (C41a)), bei dem Schritt des prädiktiven Codierens eines dem aktuellen ersten Block zugeordneten Quantifizierungsparameters, eines Quantifizierungsparameter-Prädiktionswerts, der einem Quantifizierungsparameter entspricht, der dem letzten Teilblock des ersten oder des zweiten Blocks der vorhergehenden Zeile (LEₘ₋₁) zugeordnet ist.

2. Vorrichtung zum Codieren (CO) mindestens eines Bildes, die dazu bestimmt ist, das Verfahren zum Codieren nach Anspruch 1 durchzuführen, wobei die Vorrichtung umfasst:
- Mittel (MP) zum Partitionieren des Bildes in eine Mehrzahl von Blöcken (CTU), die geeignet sind, Symbole zu enthalten, die zu einer vorbestimmten Menge von Symbolen gehören, wobei die Blöcke in Teilblöcke partitioniert sind;
- Mittel (MCE) zum entropischen Codieren eines aktuellen Blocks ausgehend von mindestens einer Symbolauftrittswahrscheinlichkeit,
- Mittel (MCP) zum prädiktiven Codieren eines dem aktuellen Block zugeordneten Quantifizierungsparameters (QP), wobei die Vorrichtung zum Codieren **dadurch gekennzeichnet ist, dass** in dem Fall (C39, O), in dem der aktuelle Block der erste zu codierende Block einer Zeile (LEₘ) aus zu codierenden aufeinanderfolgenden Blöcken ist, die von der ersten Zeile (LE₁) verschieden ist:
• die Mittel zum entropischen Codieren Symbolauftrittswahrscheinlichkeiten für den aktuellen ersten Block bestimmen, wobei die Wahrscheinlichkeiten diejenigen sind, die nach dem Codieren und anschließenden Decodieren des letzten Blocks der vorhergehenden Zeile (LEₘ₋₁) bestimmt worden sind,
• die Mittel zum prädiktiven Codieren eines dem aktuellen ersten Block zugeordneten Quantifizierungsparameters einen Quantifizierungsparameter-Prädiktionswert zuweisen, der einem Quantifizierungsparameter entspricht, der dem letzten Teilblock des ersten oder des zweiten Blocks der vorhergehenden Zeile (LEₘ₋₁) zugeordnet ist.

3. Computerprogramm, das Anweisungen beinhaltet, die bei seiner Ausführung auf einem Computer das Verfahren zum Codieren nach Anspruch 1 durchführen.

4. Computerlesbares Speichermedium, auf dem ein Computerprogramm gespeichert ist, das Anweisungen zur Ausführung der Schritte des Verfahrens zum Codieren nach Anspruch 1 beim Ausführen des Programms durch einen Computer umfasst.

5. Verfahren zum Decodieren eines für mindestens ein codiertes Bild repräsentativen Stroms (F), umfassend die folgenden Schritte:
- Identifizieren (D1), in dem Strom, einer Mehrzahl von codierten Blöcken, wobei die Blöcke geeignet sind, Symbole zu enthalten, die zu einer vorbestimmten Menge von Symbolen gehören, wobei die Blöcke in Teilblöcke partitioniert sind,
- entropisches Decodieren eines aktuellen codierten Blocks ausgehend von mindestens einer Symbolauftrittswahrscheinlichkeit,
- prädiktives Decodieren eines dem aktuellen codierten Block zugeordneten Quantifizierungsparameters (QP),
wobei das Verfahren zum Decodieren **dadurch gekennzeichnet ist, dass** in dem Fall (D29, O), in dem der aktuelle Block der erste zu decodierende Block einer Zeile (LEₘ) aus zu decodierenden aufeinanderfolgenden Blöcken ist, die von der ersten Zeile (LE₁) verschieden ist, die folgenden Schritte vorgenommen werden:
• Bestimmen (D30a)), bei dem Schritt des entropischen Decodierens, von Symbolauftrittswahrscheinlichkeiten für den aktuellen ersten Block, wobei die Wahrscheinlichkeiten diejenigen sind, die nach dem Decodieren des letzten Blocks der vorhergehenden Zeile (LEₘ₋₁) bestimmt worden sind,
• Zuweisen (D31a)), bei dem Schritt des prädiktiven Decodierens eines dem aktuellen ersten Block zugeordneten Quantifizierungsparameters, eines Quantifizierungsparameter-Prädiktionswerts, der einem Quantifizierungsparameter entspricht, der dem letzten Teilblock des ersten oder des zweiten Blocks der vorhergehenden Zeile (LEₘ₋₁) zugeordnet ist.

6. Vorrichtung zum Decodieren eines für mindestens ein codiertes Bild repräsentativen Stroms (F), die dazu bestimmt ist, das Verfahren zum Decodieren nach Anspruch 5 durchzuführen, wobei die Vorrichtung umfasst:
- Mittel (EX_DO) zum Identifizieren, in dem Strom, einer Mehrzahl von codierten Blöcken, wobei die Blöcke geeignet sind, Symbole zu enthalten, die zu einer vorbestimmten Menge von Symbolen gehören, wobei die Blöcke in Teilblöcke partitioniert sind,
- Mittel zum entropischen Decodieren eines aktuellen codierten Blocks ausgehend von mindestens einer Symbolauftrittswahrscheinlichkeit,
- Mittel zum prädiktiven Decodieren eines dem aktuellen codierten Block zugeordneten Quantifizierungsparameters (QP),
wobei die Vorrichtung zum Decodieren **dadurch gekennzeichnet ist, dass** in dem Fall (D29, O), in dem der aktuelle Block der erste zu decodierende Block einer Zeile (LEₘ) aus zu decodierenden aufeinanderfolgenden Blöcken ist, die von der ersten Zeile (LE₁) verschieden ist,
• die Mittel (MDE) zum entropischen Decodieren Symbolauftrittswahrscheinlichkeiten für den aktuellen ersten Block bestimmen, wobei die Wahrscheinlichkeiten diejenigen sind, die nach dem Decodieren des letzten Blocks der vorhergehenden Zeile (LEₘ₋₁) bestimmt worden sind,
• die Mittel (MDP) zum prädiktiven Decodieren eines dem aktuellen ersten Block zugeordneten Quantifizierungsparameters einen Quantifizierungsparameter-Prädiktionswert zuweisen, der einem Quantifizierungsparameter entspricht, der dem letzten Teilblock des ersten oder des zweiten Blocks der vorhergehenden Zeile (LEₘ₋₁) zugeordnet ist.

7. Computerprogramm, das Anweisungen beinhaltet, die bei seiner Ausführung auf einem Computer das Verfahren zum Decodieren nach Anspruch 5 durchführen.

8. Computerlesbares Speichermedium, auf dem ein Computerprogramm gespeichert ist, das Anweisungen zur Ausführung der Schritte des Verfahrens zum Decodieren nach Anspruch 5 beim Ausführen des Programms durch einen Computer umfasst.

## Claims

1. Method for coding at least one image (ICⱼ), comprising the steps of:
- partitioning (C1, C2) the image into a plurality of blocks (CTU₁, CTU₂, ..., CTUᵢ, ..., CTUₛ) that are capable of containing symbols belonging to a predetermined set of symbols, the blocks being partitioned into sub-blocks:
- entropy coding a current block on the basis of at least one symbol appearance probability,
- predictively coding a quantification parameter (QP) associated with said current block, said coding method being **characterized in that** if (C39, O) the current block is the first block to be coded in a row (LEₘ) of consecutive blocks to be coded that is separate from the first row (LE₁), then the method involves the steps of:
• determining (C40a)), during said entropy coding step, symbol appearance probabilities for said first current block, said probabilities being those that have been determined at the conclusion of the coding and then decoding of the last block in the preceding row (LEₘ₋₁),
• assigning (C41a)), during said step of predictively coding a quantification parameter associated with said first current block, a quantification parameter prediction value corresponding to a quantification parameter associated with the last sub-block in the first or second block in the preceding row (LEₘ₋₁).

2. Coding device (CO) for at least one image, which coding device is intended to implement the coding method according to Claim 1, said device comprising:
- means (MP) for partitioning the image into a plurality of blocks (CTU) that are capable of containing symbols belonging to a predetermined set of symbols, the blocks being partitioned into sub-blocks;
- means (MCE) for entropy coding a current block on the basis of at least one symbol appearance probability,
- means (MCP) for predictively coding a quantification parameter (QP) associated with said current block, said coding device being **characterized in that** if (C39, O) the current block is the first block to be coded in a row (LEₘ) of consecutive blocks to be coded that is separate from the first row (LE₁):
• the entropy coding means determine symbol appearance probabilities for said first current block, said probabilities being those that have been determined at the conclusion of the coding and then decoding of the last block in the preceding row (LEₘ₋₁),
• the means for predictively coding a quantification parameter associated with said first current block assign a quantification parameter prediction value corresponding to a quantification parameter associated with the last sub-block in the first or second block in the preceding row (LEₘ₋₁).

3. Computer program comprising instructions for implementing the coding method according to Claim 1 when it is executed on a computer.

4. Storage medium that can be read by a computer on which is stored a computer program comprising instructions for executing the steps of the coding method according to Claim 1 when said program is executed by a computer.

5. Method for decoding a stream (F) that is representative of at least one coded image, comprising the steps of:
- identifying (D1) in said stream a plurality of coded blocks, said blocks being capable of containing symbols belonging to a predetermined set of symbols, the blocks being partitioned into sub-blocks,
- entropy decoding a current coded block on the basis of at least one symbol appearance probability,
- predictively decoding a quantification parameter (QP) associated with said current coded block,
said decoding method being **characterized in that** if (D29, O) the current block is the first block to be decoded in a row (LEₘ) of consecutive blocks to be decoded that is separate from the first row (LE₁), then the method involves the steps of:
• determining (D30a)), during said entropy decoding step, symbol appearance probabilities for said first current block, said probabilities being those that have been determined at the conclusion of the decoding of the last block in the preceding row (LEₘ₋₁),
• assigning (D31a)), during said step of predictively decoding a quantification parameter associated with said first current block, a quantification parameter prediction value corresponding to a quantification parameter associated with the last sub-block in the first or second block in the preceding row (LEₘ₋₁).

6. Decoding device for a stream (F) that is representative of at least one coded image, which decoding device is intended to implement the decoding method according to Claim 5, said device comprising:
- means (EX_DO) for identifying in said stream a plurality of coded blocks, said blocks being capable of containing symbols belonging to a predetermined set of symbols, the blocks being partitioned into sub-blocks,
- means for entropy decoding a current coded block on the basis of at least one symbol appearance probability,
- means for predictively decoding a quantification parameter (QP) associated with said current coded block, said decoding device being **characterized in that** if (D29, O) the current block is the first block to be decoded in a row (LEₘ) of consecutive blocks to be decoded that is separate from the first row (LE₁),
• the entropy decoding means (MDE) determine symbol appearance probabilities for said first current block, said probabilities being those that have been determined at the conclusion of the decoding of the last block in the preceding row (LEₘ₋₁),
• the means (MDP) for predictively decoding a quantification parameter associated with said first current block assign a quantification parameter prediction value corresponding to a quantification parameter associated with the last sub-block in the first or second block in the preceding row (LEₘ₋₁).

7. Computer program comprising instructions for implementing the decoding method according to Claim 5 when it is executed on a computer.

8. Storage medium that can be read by a computer on which is stored a computer program comprising instructions for executing the steps of the decoding method according to Claim 5 when said program is executed by a computer.
